# EUROPEAN PATENT APPLICATION

(11) **EP 3 881 928 A1**
(43) Date of publication of application: **22.09.2021**
(21) Application number: 19906340.5
(22) Date of filing: 26.12.2019
(51) Int. Cl.: B01F 1/00, B63B 13/00, C02F 1/50

(54) **BALLAST WATER TREATMENT DEVICE**

(30) Priority: 27.12.2018 JP 2018244404
(71) Applicant: Kuraray Co., Ltd., Kurashiki-shi, Okayama 710-0801 (JP)
(72) Inventor: YAMAMOTO, Koji, Osaka-shi, Osaka 530-8611 (JP); YAMAMOTO, Mitsuaki, Osaka-shi, Osaka 530-8611 (JP); MATSUDA, Takeshi, Osaka-shi, Osaka 530-8611 (JP)
(74) Representative: Vossius & Partner Patentanwälte Rechtsanwälte mbB
(86) International application number: PCT/JP2019/051151
(87) International publication number: WO 2020/138300

(57) **Abstract**

A ballast water treatment system includes: a chemical agent container for containing a chemical agent for a ballast water treatment; a chemical liquid preparation tank having a tank main body for containing the chemical agent supplied from the chemical agent container and water for dissolving the chemical agent, and a mixture part for mixing the chemical agent with the water in the tank main body; a chemical liquid storage tank for storing the chemical liquid obtained by dissolving the chemical agent in the water in the chemical liquid preparation tank; and a chemical liquid supply part for supplying the chemical liquid stored in the chemical liquid storage tank into ballast water.

## Description

### Technical Field

The present invention relates to a ballast water treatment system.

### Background Art

It has been known that when a vessel such as a cargo ship or a container ship carries no freight, seawater is stored in the vessel as ballast water to stabilize the vessel. The ballast water should be discharged into the sea when cargos are loaded on the vessel. However, there is a problem that microorganisms and the like residing in the ballast water will destroy the ecosystem in the sea.

To eliminate this problem, as described in Patent Literatures 1 and 2, the ballast water is subjected to sterilizing process. Patent Literature 1 discloses a system for storing and dissolving a chemical agent for ballast water sterilization, comprising: a chemical agent dissolving tank; a chemical agent adder for storing and adding a sterilizing agent and the like into the chemical agent dissolving tank at a given amount; and an agitator for mixing and dissolving the chemical agent added from the chemical agent adder into the chemical agent dissolving tank with a solvent. Besides, Patent Literature 2 discloses a ballast water treatment system in which a chemical agent is supplied into a bypass pipe having both ends connected to a ballast pipe.

In the system disclosed in Patent Literature 1, the chemical liquid which has been prepared by adding the chemical agent from the chemical agent adder into the chemical agent dissolving tank and mixing the chemical agent with the solvent by the agitator is introduced into the ballast water. However, the system involves a likelihood that insufficiently mixed chemical liquid in the chemical agent dissolving tank is introduced into the ballast water. In other words, the system has the problem that it is difficult to supply a chemical liquid having a stable chemical agent concentration to the ballast water. The system disclosed in Patent Literature 2 has the same problem.

### Citation List

### Patent Literature

Patent Literature 1: Japanese Unexamined Patent Publication No. 2017-527439
Patent Literature 2: International Unexamined Patent Publication No. 2018/168665

### Summary of Invention

An object of the present invention is to provide a ballast water treatment system which can supply a chemical liquid having a stable chemical agent concentration to ballast water.

A ballast water treatment system according to an aspect of the present invention comprises: a chemical agent container for containing a chemical agent for a ballast water treatment; a chemical liquid preparation tank including a tank main body for containing the chemical agent supplied from the chemical agent container and water for dissolving the chemical agent, and a mixture part for mixing the chemical agent with the water in the tank main body; a chemical liquid storage tank for storing the chemical liquid obtained by dissolving the chemical agent in the water in the chemical liquid preparation tank; and a chemical liquid supply part for supplying the chemical liquid stored in the chemical liquid storage tank into ballast water.

According to the present invention, it is possible to provide a ballast water treatment system which can supply a chemical liquid having a stable chemical agent concentration to ballast water.

### Brief Description of Drawings

FIG. 1 is a diagram schematically showing a configuration of a ballast water treatment system according to a first embodiment of the present invention.
FIG. 2 is a view showing a cross section of a sterilizing liquid preparation tank taken along a line II-II in FIG. 1.
FIG. 3 is a flowchart showing a sequence of operations in the ballast water treatment system when ballasting.
FIG. 4 is a diagram schematically showing a configuration of a ballast water treatment system according to a second embodiment of the present invention.
FIG. 5 is a schematic diagram illustrating a ballast water treatment system according to another embodiment of the present invention.

### Description of Embodiments

Hereinafter, a ballast water treatment system according to embodiments of the present invention will be described in detail with reference to the drawings.

### (First embodiment)

### <Configuration of a ballast water treatment system>

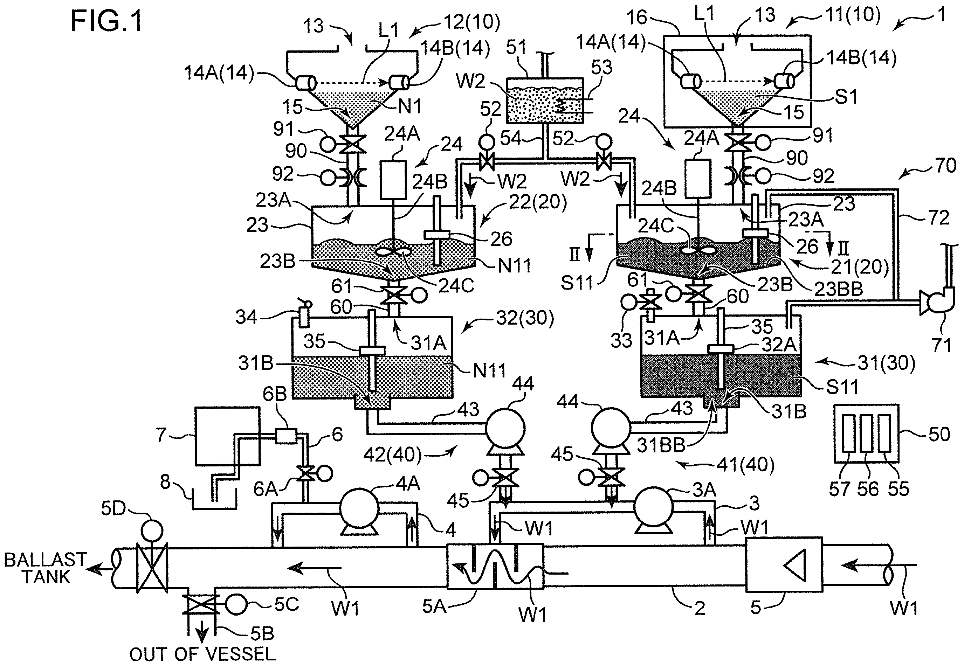

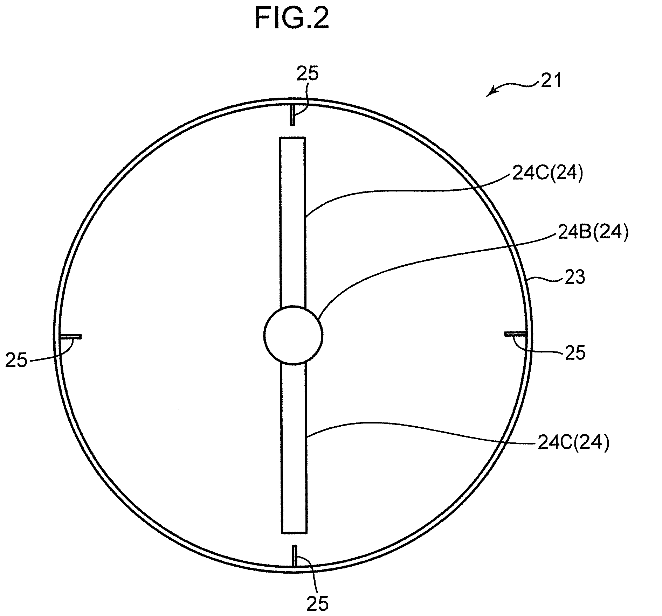

First, a configuration of a ballast water treatment system 1 according to a first embodiment of the present invention will be described with reference to FIGS. 1 and 2. The ballast water treatment system 1 is adapted for sterilizing ballast water W1 when charging (ballasting) the ballast water into a ballast tank disposed in a vessel such as a cargo ship or a container ship, and neutralizing the ballast water W1 when discharging (de-ballasting) the ballast water W1 from the ballast tank, for example. The ballast water treatment system 1 is used, for example, with being disposed in an engine room of a vessel.

As shown in FIG. 1, the vessel is provided with: a ballast pipe 2 for introducing the ballast water W1 into the ballast tank (not shown); a bypass pipe 3 having both ends connected to the ballast pipe 2; a bypass pump 3A provided in the bypass pipe 3; a measurement bypass pipe 4 having both ends connected to the ballast pipe 2 downstream of the bypass pipe 3; a measurement bypass pump 4A provided in the measurement bypass pipe 4; and a flow rate measuring part 5 for measuring a flow rate of the ballast water W1 in the ballast pipe 2. The flow rate measuring part 5 is disposed upstream of the upstream connection end of the bypass pipe 3 to the ballast pipe 2. Further, a ballast pump (not shown) for drawing the ballast water W1 (seawater) into the ballast pipe 2, a filter unit, and the like are disposed upstream of the flow rate measuring part 5.

A mixer 5A is provided in an intermediate portion of the ballast pipe 2. The mixer 5A is configured to cause the ballast water W1 to flow in a meandering way, and a downstream end of the bypass pipe 3 is connected to the mixer 5A as shown in FIG. 1, which consequently causes the ballast water W1 flowing in the ballast pipe 2 and the ballast water W1 joining in the ballast pipe 2 from the bypass pipe 3 to be mixed in the mixer 5A.

A branch pipe 6 is connected with the measurement bypass pipe 4 at a position downstream of the measurement bypass pump 4A. The branch pipe 6 is provided with a measurement valve 6A and a fixed flow rate valve 6B. Opening the measurement valve 6A causes the ballast water W1 to flow into the branch pipe 6 from the measurement bypass pipe 4 and into a concentration measuring part 7 at a fixed flow rate. The concentration measuring part 7 measures a residual chlorine concentration of the ballast water W1. The fixed flow rate valve 6B is provided to stabilize the measurement in the concentration measuring part 7. Further, the ballast water W1 is accumulated in a water reception part 8 after the concentration measurement is completed.

A drainage pipe 5B is connected with the ballast pipe 2 downstream of the downstream connection end of the measurement bypass pipe 4. The drainage pipe 5B is provided with a valve 5C. The ballast pipe 2 is provided with a valve 5D downstream of the connection portion of the drainage pipe 5B.

As shown in FIG. 1, the ballast water treatment system 1 mainly includes a chemical agent container 10, a chemical liquid preparation tank 20, a chemical liquid storage tank 30, a chemical liquid supply part 40, and a control part 50. FIG. 1 shows only main constituent elements of the ballast water treatment system 1. The ballast water treatment system 1 may be provided with other constituent elements which are not shown in the drawing. Hereinafter, each constituent element of the ballast water treatment system 1 will be described.

The chemical agent container 10 is adapted for containing a chemical agent (sterilizing agent S1, neutralizing agent N1) for a ballast water treatment, and includes a sterilizing agent container 11 and a neutralizing agent container 12.

The sterilizing agent container 11 includes a hopper for containing the sterilizing agent S1 for sterilizing the ballast water W1. The sterilizing agent container 11 is provided in an upper portion thereof with a charging port 13 for charging the sterilizing agent S1, and in a bottom portion thereof with a dropping port 15 for letting the sterilizing agent S1 drop. As shown in FIG. 1, the sterilizing agent container 11 has a shape tapering to the dropping port 15. Sodium dichloroisocyanurate in the form of granule or powder is used, for example, as the sterilizing agent S1. However, the sterilizing agent S1 is not limited to the particular one.

The sterilizing agent container 11 is provided with a residual amount detection section 14 for detecting a residual amount of the sterilizing agent S1. The residual amount detection section 14 is, for example, provided with a photosensor which includes a light emitting portion 14A and a light receiving portion 14B facing the light emitting portion 14A, they being arranged in the sterilizing agent container 11. In a case where the residual amount of the sterilizing agent S1 is sufficient, the light L1 from the light emitting portion 14A is shielded by the sterilizing agent S1, which consequently decreases the amount of light received by the light receiving portion 14B. On the other hand, when the residual amount of the sterilizing agent S1 becomes insufficient, the light L1 reaches the light receiving portion 14B without being shielded by the sterilizing agent S1 as shown in FIG. 1, which consequently increases the amount of received light. A decrease in the residual amount of the sterilizing agent S1 can be detected based on a variation in the amount of received light.

The sterilizing agent container 11 is provided with a cooling mechanism 16. Chlorine gas is likely to occur when the sterilizing agent S1 is under a condition of high temperature. This is prevented by the cooling mechanism 16. The configuration of the cooling mechanism 16 is not limited to a particular one. However, the cooling mechanism 16 may be provided, for example, with a cooling water jacket covering the sterilizing agent container 11.

The neutralizing agent container 12 includes a hopper for containing the neutralizing agent N1 to be used for neutralization treatment of the ballast water W1, and is fundamentally configured in an identical manner as the sterilizing agent container 11. However, the neutralizing agent container 12 is not provided with the cooling mechanism 16. As the neutralizing agent N1, for example, a reducing agent such as sodium sulfite is used. The neutralizing capacity of the agent decreases as the oxidation advances. In order to prevent the oxidation, the neutralizing agent container 12 is configured to have a high degree of hermeticity by use of a packing and the like. Portions identical to those of the sterilizing agent container 11 described with reference to FIG. 1 are allotted with the same reference numerals, and the description thereof will be omitted.

The chemical liquid preparation tank 20 is adapted for preparing chemical liquid (sterilizing liquid S11, neutralizing liquid N11) by dissolving a chemical agent (sterilizing agent S1, neutralizing agent N1) in the water W2, and includes a sterilizing liquid preparation tank 21 and a neutralizing liquid preparation tank 22.

As shown in FIG. 1, the sterilizing liquid preparation tank 21 is arranged lower than the sterilizing agent container 11 in a vertical direction, and includes a tank main body 23 and a mixture part 24. The tank main body 23 is adapted for containing the sterilizing agent S1 supplied from the sterilizing agent container 11 and water W2 for dissolving the sterilizing agent S1, and for example, has a cylindrical shape. The mixture part 24 is adapted for mixing the sterilizing agent S1 with the water W2 in the tank main body 23.

The tank main body 23 has a volume of, for example, about 10 liters, and is provided with an upper tank port 23A and a lower tank port 23B. The tank main body 23 is provided with a bottom surface 23BB inclining downward to the lower tank port 23B. The bottom surface 23BB keeps the solution (sterilizing liquid S11) in the tank main body 23 to flow to the lower tank port 23B even when the vessel inclines.

As shown in FIG. 1, the upper tank port 23A is connected to the dropping port 15 of the sterilizing agent container 11 via a first pipe 90 which extends vertically. The first pipe 90 is provided with a vertical arrangement of a first valve 91 and a second valve 92 to switchably permit and suspend supply (drop) of the sterilizing agent S1 from the sterilizing agent container 11 to a sterilizing liquid preparation tank 21 (tank main body 23). The second valve 92 is, for example, a pinch valve which prevents a mass of moisture from entering into the sterilizing agent container 11 from the sterilizing liquid preparation tank 21. Further, a dry air supply section (not shown) may be provided to supply a mass of dry air to the first pipe 90 to thereby prevent the sterilizing agent S1 from solidifying due to moisture.

The tank main body 23 has a hermetic structure, and is made of a metal having an excellent corrosion resistance and a high durability, such as titanium, which thus enables to prepare a sterilizing liquid S11 having a high concentration in the sterilizing liquid preparation tank 21. The material for the tank main body 23 is not limited to titanium, but a resin such as vinyl chloride may be also used, for example. However, titanium is preferable because of having high corrosion resistance and durability.

The mixture part 24 is arranged in the vicinity of a center of the tank main body 23, and includes a driving source 24A including a motor arranged outside the tank main body 23, a rotating shaft 24B to be rotated about an axis by the driving source 24A, and a stirring blade 24C provided on a lower end of the rotating shaft 24B.

FIG. 2 shows a cross section of the sterilizing liquid preparation tank 21 taken along the line II-II in FIG. 1. As shown in FIG. 2, the sterilizing liquid preparation tank 21 includes a plurality of (four in the present embodiment) baffle plates 25 arranged around the mixture part 24 in the tank main body 23. Each baffle plate 25 extends radially inward from an inner surface of the tank main body 23 toward the center thereof, and extends vertically in parallel with the rotating shaft 24B.

The ballast water treatment system 1 includes a first detection part 26 for detecting whether an amount of the sterilizing liquid S11 in the sterilizing liquid preparation tank 21 is equal to or lower than a predetermined lower limit amount. As shown in FIG. 1, the first detection part 26 includes a liquid surface level gauge arranged in the tank main body 23, and performs the detection based on a liquid surface level of the sterilizing liquid S11.

The neutralizing liquid preparation tank 22 is fundamentally configured in an identical manner as the sterilizing liquid preparation tank 21. Portions identical to those of the sterilizing liquid preparation tank 21 described with reference to FIG. 1 are allotted with the same reference numerals, and the description thereof will be omitted.

The ballast water treatment system 1 includes a water storage part 51 for storing the water W2 for dissolving the chemical agent (sterilizing agent S1, neutralizing agent N1). An end of a water supply pipe 54 is connected to a bottom portion of the water storage part 51. As shown in FIG. 1, the water supply pipe 54 is branched into two branches whose ends are opened above surfaces of liquid in the sterilizing liquid preparation tank 21 and the neutralizing liquid preparation tank 22, respectively. Besides, the branches are respectively provided with water supply valves 52 for switchably permitting and suspending supply of the water W2 from the water storage part 51 into the sterilizing liquid preparation tank 21 and the neutralizing liquid preparation tank 22.

The ballast water treatment system 1 includes a heating part 53 for heating the water W2 stored in the water storage part 51. The heating part 53 is, for example, provided with an electric heater in the water storage part 51 in the vicinity of the bottom portion thereof. This enables to supply the heated water W2 into the sterilizing liquid preparation tank 21 and the neutralizing liquid preparation tank 22, respectively. Therefore, a highly concentrated chemical liquid can be prepared promptly (or in a short time) in each tank.

The chemical liquid storage tank 30 is adapted for storing the chemical liquid (sterilizing liquid S11, neutralizing liquid N11) obtained by dissolving the chemical agent in the water W2 in the chemical liquid preparation tank 20. The chemical liquid storage tank 30 includes a sterilizing liquid storage tank 31 and a neutralizing liquid storage tank 32.

The sterilizing liquid storage tank 31 is constituted by a closed tank having a volume equal to or larger than the sterilizing liquid preparation tank 21 (tank main body 23), and is arranged lower than the sterilizing liquid preparation tank 21 in a vertical direction. Namely, the sterilizing agent container 11, the sterilizing liquid preparation tank 21, and the sterilizing liquid storage tank 31 are arranged so as to overlap each other in a vertical direction (up and down direction).

The sterilizing liquid storage tank 31 is provided with an upper tank port 31A and a lower tank port 31B. As shown in FIG. 1, the upper tank port 31A is connected to the lower tank port 23B of the sterilizing liquid preparation tank 21 (tank main body 23) via a second pipe 60 which extends vertically. The second pipe 60 is provided with a third valve 61 for switchably permitting and suspending supply (drop) of the sterilizing liquid S11 from the sterilizing liquid preparation tank 21 to the sterilizing liquid storage tank 31. Further, a recess section 31BB is formed in a portion of the bottom surface of the sterilizing liquid storage tank 31, specifically, is the recessed portion defining the lower tank port 31B in the bottom surface.

The ballast water treatment system 1 includes a second detection part 35 for detecting whether an amount of the sterilizing liquid S11 in the sterilizing liquid storage tank 31 is equal to or lower than a predetermined lower limit amount. As shown in FIG. 1, the second detection part 35 includes a liquid surface level gauge arranged in the sterilizing liquid storage tank 31, and performs the detection described above based on a liquid surface level of the sterilizing liquid S11. Specifically, as the liquid surface level of the sterilizing liquid S11 in the sterilizing liquid storage tank 31 lowers, the float portion 32A of the second detection part 35 moves down into the recess section 31BB to thereby change the electrical conductive state of the second detection part 35. Consequently, it is detected that the amount of the sterilizing liquid S11 becomes equal to or lower than the lower limit amount. As shown in FIG. 1, the provision of the recess section 31BB reduces the residual amount of the sterilizing liquid S11 in the sterilizing liquid storage tank 31 when the float portion 32A detects the insufficiency of the sterilizing liquid S11 in the sterilizing liquid storage tank 31.

The ballast water treatment system 1 includes a gas discharge mechanism 70. As shown in FIG. 1, the gas discharge mechanism 70 includes a gas discharge pipe 72 having branches opened in a space above the surface of liquid in the sterilizing liquid preparation tank 21 (tank main body 23) and the sterilizing liquid storage tank 31, respectively, and a blower 71 provided in the gas discharge pipe 72.

Here, chlorine gas is likely to occur in the sterilizing liquid preparation tank 21 and the sterilizing liquid storage tank 31 as a result of the following reactions. First, the dissolution of the sterilizing agent S1 (sodium dichloroisocyanurate) in the water W2 is represented by a chemical equation: C₃H₄Cl₂N₃O₅Na → C₃H₃N₃O₃ + NaClO + HClO. Then, as the sterilizing liquid S11 decomposes, a reaction of 2HClO → 2HCl + O₂↑, HCl + HClO ⇔ Cl₂ + H₂O proceeds. As a result, the chlorine gas occurs.

The chlorine gas which has occurred in the reactions is discharged outside from the sterilizing liquid preparation tank 21 and the sterilizing liquid storage tank 31 via the gas discharge pipe 72 by driving the blower 71. Here, as shown in FIG. 1, a suction valve 33 is provided at the opposite to the arrangement portion of the end of the gas discharge pipe 72 in the upper part of the sterilizing liquid storage tank 31. This generates a gas flow directing from the suction valve 33 to the end of the gas discharge pipe 72 in the sterilizing liquid storage tank 31, thereby facilitating the discharge of the chlorine gas.

The neutralizing liquid storage tank 32 is fundamentally configured in an identical manner as the sterilizing liquid storage tank 31, but differs from the sterilizing liquid storage tank 31 in provision of a breather valve 34 in place of the suction valve 33. The breather valve 34 has a function of discharging the air out of the tank when the pressure in the neutralizing liquid storage tank 32 is higher than the atmospheric pressure, and suctioning the air into the tank when the pressure in the neutralizing liquid storage tank 32 is lower than the atmospheric pressure. Further, the breather valve 34 comes into a closed state when the pressure in the neutralizing liquid storage tank 32 is equal to the atmospheric pressure. Portions of the neutralizing liquid storage tank 32 identical to those of the sterilizing liquid storage tank 31 described with reference to FIG. 1 are allotted with the same reference numerals, and the description thereof will be omitted.

The chemical liquid supply part 40 is adapted for supplying the chemical liquid (sterilizing liquid S11, neutralizing liquid N11) stored in the chemical liquid storage tank 30 to the ballast water W1, and includes a sterilizing liquid supply part 41 and a neutralizing liquid supply part 42.

The sterilizing liquid supply part 41 includes: a supply pipe 43 having an end connected to the lower tank port 31B of the sterilizing liquid storage tank 31 and the other end connected to the bypass pipe 3 (at a position downstream of the bypass pump 3A); a supply pump 44 provided on the supply pipe 43; and a supply valve 45 provided downstream of the supply pump 44.

The neutralizing liquid supply part 42 is fundamentally configured in an identical manner as the sterilizing liquid supply part 41. However, as shown in FIG. 1, the downstream end of the supply pipe 43 of the neutralizing liquid supply part 42 is connected with the bypass pipe 3 downstream of the downstream end of the supply pipe 43 of the sterilizing liquid supply part 41. Portions of the neutralizing liquid supply part 42 identical to those of the sterilizing liquid supply part 41 described with reference to FIG. 1 are allotted with the same reference numerals, and the description thereof will be omitted.

The control part 50 is provided with a control unit for controlling a variety of operations of the ballast water treatment system 1. The control part 50 includes an output portion 55 for controlling the first to third valves 91, 92, 61, the water supply valve 52, the supply valve 45, the mixture part 24, the heating part 53, and the supply pump 44; a reception portion 56 for receiving a detection result by the first detection part 26 and the second detection part 35; and a storage portion 57 for storing a variety of operation programs for the ballast water treatment system 1.

Each operation program includes information on a control sequence of each of the aforementioned parts, and controls each of the aforementioned parts through the output portion 55. The output portion 55 and the reception portion 56 are provided with a central processing unit (CPU), and the storage portion 57 is provided with memories. The operations of the ballast water treatment system 1 which are controlled by the control part 50 will be below described in detail.

### <Sterilization when ballasting>

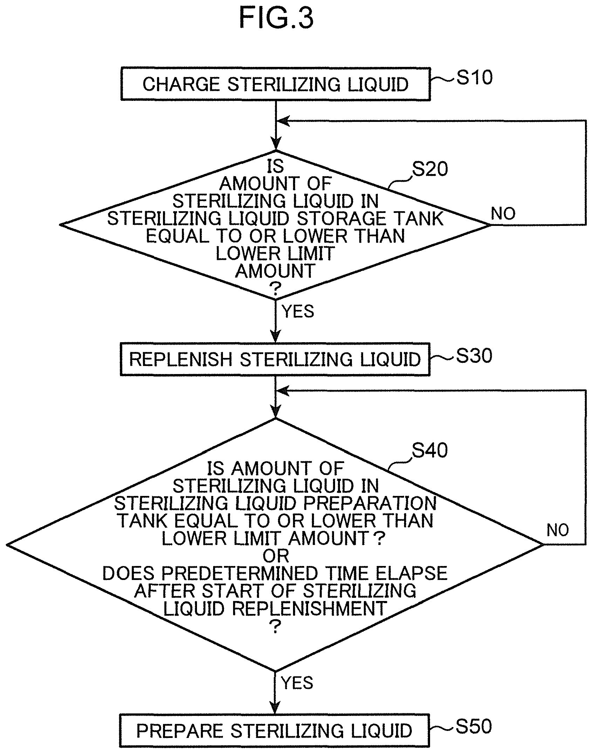

Now, the operation of the ballast water treatment system 1 for the sterilization when ballasting will be described with reference to the flowchart shown in FIG. 3.

First, seawater is drawn into the ballast pipe 2 as the ballast water W1 by driving the ballast pump (not shown) with shifting the valve 5D in the open state and the valve 5C in the closed state. The drawn ballast water W1 flows in the ballast pipe 2 to the ballast tank (from the right side to the left side in FIG. 1) to fulfill the ballast tank. In this time, a part of the ballast water W1 is flowed into the bypass pipe 3 from the ballast pipe 2 by driving the bypass pump 3A. Thereafter, the ballast water W1 having flowed through the bypass pipe 3 joins, in the mixer 5A, the ballast water W1 flowing in the ballast pipe 2.

In the ballasting, the sterilizing liquid S11 is supplied (added) in the ballast water W1 flowing in the bypass pipe 3 (Step 10). Specifically, the control part 50 causes the supply valve 45 of the sterilizing liquid supply part 41 to open and drives the supply pump 44, which allows the sterilizing liquid S11 flowed out of the sterilizing liquid storage tank 31 to flow into the bypass pipe 3 through the supply pipe 43. Thereafter, the sterilizing liquid S11 is homogeneously mixed with the ballast water W1 by the mixer 5A.

Further, in the ballasting, the concentration measuring part 7 measures a residual chlorine concentration of the ballast water W1 which the sterilizing liquid S11 is added. Specifically, the control part 50 causes the measurement bypass pump 4A to operate and the measurement valve 6A to open, so that the ballast water W1 flows into the concentration measuring part 7. Then, the control part 50 controls the operation of the supply pump 44 of the sterilizing liquid supply part 41 in such a manner that the residual chlorine concentration measured by the concentration measuring part 7 reaches a set concentration (for example, 7mg/L).

When the second detection part 35 detects that the amount of the sterilizing liquid S11 in the sterilizing liquid storage tank 31 becomes equal to or lower than the predetermined lower limit amount after the reduction of the sterilizing liquid S11 in the sterilizing liquid storage tank 31 owing to the addition of the sterilizing liquid S11 into the ballast water W1 ("Yes" in step S20), the detection signal is sent to the control part 50 (reception portion 56). Subsequently, the control part 50 receives the detection signal and executes the sterilizing liquid replenishment operation (chemical liquid replenishment operation) of replenishing the sterilizing liquid S11 from the sterilizing liquid preparation tank 21 to the sterilizing liquid storage tank 31 (Step S30). Specifically, the control part 50 (the output portion 55) shifts the third valve 61 to the open state from the closed state, so that the sterilizing liquid S11 flows from the sterilizing liquid preparation tank 21 to the sterilizing liquid storage tank 31 through the second pipe 60 to thereby replenish the sterilizing liquid storage tank 31 with the sterilizing liquid S11.

When the first detection part 26 detects that the amount of the sterilizing liquid S11 in the sterilizing liquid preparation tank 21 becomes equal to or lower than a predetermined lower limit amount after the reduction of the sterilizing liquid S11 in the sterilizing liquid preparation tank 21 owing to the replenishment operation described above ("Yes" in step S40), the detection signal is sent to the control part 50 (reception portion 56). Subsequently, the control part 50 receives the detection signal and starts the sterilizing liquid preparation operation (chemical liquid preparation operation) (Step S50). Specifically, the control part 50 shifts the third valve 61 to the closed state, the water supply valve 52 to the open state, and the first and second valves 91, 92 to the open state, and concurrently drives the rotating shaft 24B.

This causes the water W2 to be supplied from the water storage part 51 into the sterilizing liquid preparation tank 21 through the water supply pipe 54, and the sterilizing agent S1 to drop from the sterilizing agent container 11 into the sterilizing liquid preparation tank 21 through the first pipe 90. Subsequently, the stirring blade 24C stirs the water W2 to mix with the sterilizing agent S1. In this way, the sterilizing agent S1 is dissolved in the water W2 to thereby prepare the sterilizing liquid S11 having a predetermined concentration. In this time, the control part 50 may drive the heating part 53 to thereby supply the heated water W2 into the sterilizing liquid preparation tank 21. In that case, since the sterilizing agent S1 dissolves in the water W2 promptly, a highly concentrated sterilizing liquid S11 can be prepared promptly (or in a short time).

An execution time of the sterilizing liquid preparation operation, which is controlled by a timer incorporated in the control unit, is shorter than a time until the sterilizing liquid S11 in the sterilizing liquid storage tank 31 reaches a lower limit amount which is a criterion to start the replenishment after the fulfillment of the tank. As an example, the former is about 5 to 10 minutes, whereas the latter is about 20 minutes (at a maximum output of the supply pump 44).

Further, the control part 50 controls the open time of the water supply valve 52 to supply a predetermined amount of water W2 from the water storage part 51 into the sterilizing liquid preparation tank 21 in the sterilizing liquid preparation operation. Specifically, the water storage part 51 stores the predetermined amount of water W2, and the control part 50 keeps the water supply valve 52 in the open state until all the water W2 in the water storage part 51 is supplied into the sterilizing liquid preparation tank 21.

The control part 50 may start the sterilizing liquid preparation operation, not limited to starting of the sterilizing liquid preparation operation based on receiving the detection signal from the first detection part 26, but when a predetermined time elapses after the start of the sterilizing liquid replenishment operation. The timer provided in the control unit may measure the predetermined time.

### <Drainage of the sterilizing liquid>

Next, operations of the ballast water treatment system 1 for the drainage of the sterilizing liquid S11 will be described. The sterilizing liquid S11, which has a likelihood of giving negative effects to apparatus such as the tank, is all drained out of the vessel after the completion of the ballasting in the following process.

First, when draining the sterilizing liquid S11, the valve 5D is placed in the closed state, and the valve 5C in the open state. Consequently, the ballast water W1 having been drawn from the outside of the vessel by the ballast pump flows, after having flowed through the ballast pipe 2, the bypass pipe 3, and the measurement bypass pipe 4, into the drainage pipe 5B, and is drained out of the vessel through the drainage pipe 5B.

In this state, the control part 50 (output portion 55) opens the respective supply valves 45 of the sterilizing liquid supply part 41 and the neutralizing liquid supply part 42, and drives the respective supply pumps 44. This allows the residual sterilizing liquid S11 in the sterilizing liquid storage tank 31 to flow in the ballast water W1 flowing in the bypass pipe 3. Thereafter, the ballast water W1 is added with the neutralizing liquid N11 to be harmless.

The ballast water W1 having been rendered harmless by the neutralization treatment is drained out of the vessel through the drainage pipe 5B. In the same manner as in the ballasting, the concentration measuring part 7 measures a residual chlorine concentration of the ballast water W1. In the drainage of the sterilizing liquid S11, the respective additional amounts of the sterilizing liquid S11 and the neutralizing liquid N11 are adjusted so as to have the residual chlorine concentration of Omg/L.

Subsequently, after the sterilizing liquid storage tank 31 is emptied, the control part 50 (output portion 55) shifts the third valve 61 to the open state from the closed state. Consequently, the residual sterilizing liquid S11 in the sterilizing liquid preparation tank 21 (tank main body 23) is flowed through the second pipe 60, the sterilizing liquid storage tank 31, and the supply pipe 43, and discharged into the bypass pipe 3. Thereafter, similarly to the above, the ballast water W1 which has been added with the neutralizing liquid N11 to be harmless is drained out of the vessel through the drainage pipe 5B.

After the residual sterilizing liquid S11 in the sterilizing liquid storage tank 31 and the sterilizing liquid preparation tank 21 is drained in this way, the sterilizing liquid storage tank 31 and the sterilizing liquid preparation tank 21 are subsequently cleaned. Specifically, the control part 50 shifts the water supply valve 52 to the open state from the closed state based on receiving the drainage completion signal (the signal from the first detection part 26 indicating that the amount of the sterilizing liquid S11 in the sterilizing liquid preparation tank 21 is equal to or lower than a lower limit amount, and the signal from the second detection part 35 indicating that the amount of the sterilizing liquid S11 in the sterilizing liquid storage tank 31 is equal to or lower than the lower limit amount) indicating a drainage completion of the sterilizing liquid S11 from the sterilizing liquid preparation tank 21 and the sterilizing liquid storage tank 31. Consequently, the water W2 is supplied from the water storage part 51 into the sterilizing liquid preparation tank 21 through the water supply pipe 54. The inner surface of the sterilizing liquid preparation tank 21 is cleaned with the water W2.

Further, the control part 50 shifts the third valve 61 to the open state from the closed state after accumulation of a certain amount of water W2 in the sterilizing liquid preparation tank 21. This allows the water W2 to flow from the sterilizing liquid preparation tank 21 into the sterilizing liquid storage tank 31 through the second pipe 60. The inner surface of the sterilizing liquid storage tank 31 is cleaned with the water W2. Thereafter, the control part 50 places the supply valve 45 in the open state and drives the supply pump 44 to thereby drain the water W2 having been used for the cleaning from the sterilizing liquid storage tank 31.

This cleaning operation prevents the sterilizing liquid preparation tank 21 and the sterilizing liquid storage tank 31 from corroding. Additionally, the occurrence of the chlorine gas can be completely eliminated by completely washing off the residual sterilizing liquid S11 in the form of droplets from the inner surface of each tank. Further, the chlorine gas in the tanks may be discharged out of the tanks by opening the suction valve 33 and driving the blower 71 after the sterilizing liquid S11 is completely drained from the sterilizing liquid storage tank 31 and the sterilizing liquid preparation tank 21.

As described above, in the ballast water treatment system 1 according to the present embodiment, the sterilizing liquid preparation tank 21 and the sterilizing liquid storage tank 31 are separately provided. Further, the sterilizing liquid S11 is prepared by mixing the sterilizing agent S1 with the water W2 in the sterilizing liquid preparation tank 21, and the sterilizing liquid S11 is supplied into the ballast water W1 after having been temporarily stored in the sterilizing liquid storage tank 31. Therefore, unlike a configuration of supplying sterilizing liquid S11 prepared in a sterilizing liquid preparation tank 21 directly into ballast water W1, the configuration enables to prevent the insufficiently mixed sterilizing liquid S11 from being supplied into the ballast water W1 to thereby supply the sterilizing liquid S11 having a stable chemical agent concentration into the ballast water W1.

### (Second Embodiment)

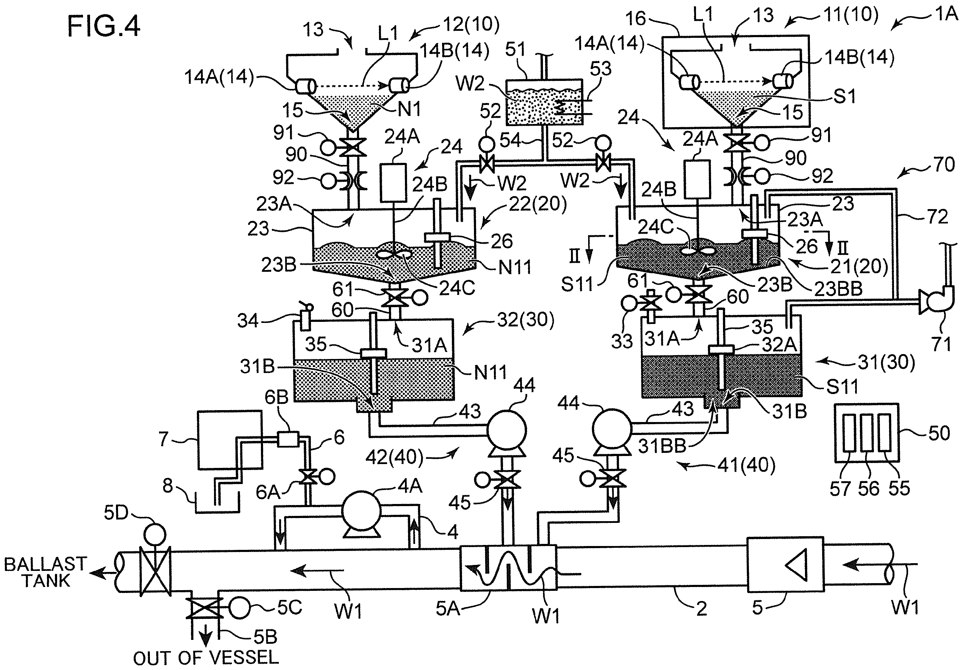

Next, a configuration of a ballast water treatment system 1A according to a second embodiment of the present invention will be described with reference to FIG. 4. The ballast water treatment system 1A according to the second embodiment is fundamentally configured in an identical manner and enhances identical effects to the ballast water treatment system 1 according to the first embodiment, but differs from the ballast water treatment system 1 according to the first embodiment in being configured to supply the chemical liquid (sterilizing liquid S11 and neutralizing liquid N11) not to the bypass pipe 3 but directly to the ballast pipe 2. Hereinafter, only differences from the ballast water treatment system 1 according to the first embodiment will be described.

As shown in FIG. 4, in the second embodiment, the bypass pipe 3 (FIG. 1) is not provided to the ballast pipe 2. Further, the supply pipe 43 of the sterilizing liquid supply part 41 and the supply pipe 43 of the neutralizing liquid supply part 42 are connected to the ballast pipe 2 at the respective positions of the mixer 5A. Even in this configuration, it is possible to supply the sterilizing liquid S11 having a stable concentration to the ballast water W1 in the same way as the

### first embodiment.

### (Other embodiments)

Finally, other embodiments according to the present invention will be described.

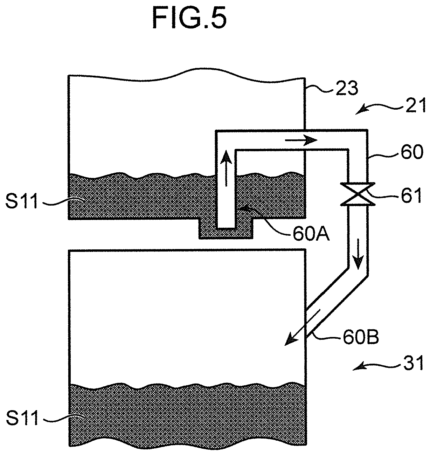

In the first embodiment, described is the configuration of causing the sterilizing liquid S11 to drop from the sterilizing liquid preparation tank 21 into the sterilizing liquid storage tank 31 through the second pipe 60. However, the present embodiment is not limited to this configuration. For example, as shown in FIG. 5, the second pipe 60 may be formed to have one end 60A placed in the sterilizing liquid S11 in the sterilizing liquid preparation tank 21 (tank main body 23) and the other end 60B connected with the sterilizing liquid storage tank 31 after extension from the one end 60A to the outside of the sterilizing liquid preparation tank 21. In this configuration, the sterilizing liquid S11 is supplied from the sterilizing liquid preparation tank 21 into the sterilizing liquid storage tank 31 owing to the Principle of Syphon after opening a third valve 61 arranged outside the sterilizing liquid storage tank 31.

In the first embodiment, described is the configuration where the sterilizing liquid preparation tank 21 and the sterilizing liquid storage tank 31 are independent. However, the present embodiment is not limited to this configuration. For example, a partition plate may be provided in a single tank to define two separated spaces which function as a sterilizing liquid preparation tank and a sterilizing liquid storage tank, respectively.

When discharging (de-ballasting) the ballast water W1 in the ballast tank to the outside of the vessel, the addition of the neutralizing liquid N11 in the ballast water W1, the replenishment of the neutralizing liquid N11, and the preparation of the neutralizing liquid N11 may be performed in accordance with the flowchart in FIG. 3, similarly to the sterilization during ballasting described with respect to the first embodiment.

The heating part 53 and the baffle plate 25 described with respect to the first embodiment may be omitted.

The sterilizing agent container 11, the sterilizing liquid preparation tank 21, and the sterilizing liquid storage tank 31 may be arranged so as to overlap each other in the vertical direction as in the first embodiment, but are not limited to this arrangement, and may be arranged so as not to overlap each other in the vertical direction. Besides, the neutralizing agent container 12, the neutralizing liquid preparation tank 22, and the neutralizing liquid storage tank 32 may be arranged so as to overlap each other in the vertical direction as in the first embodiment, but are not limited to this arrangement, and may be arranged so as not to overlap each other in the vertical direction.

In the embodiments, described is the configuration where the supply pipe 43 of the sterilizing liquid supply part 41 is connected with the bypass pipe 3 upstream of the supply pipe 43 of the neutralizing liquid supply part 42. However, the supply pipe 43 of the neutralizing liquid supply part 42 may be connected with the bypass pipe 3 upstream of the supply pipe 43 of the sterilizing liquid supply part 41.

### The embodiments will be summarized below.

A ballast water treatment system according to the embodiments comprises: a chemical agent container for containing a chemical agent for a ballast water treatment; a chemical liquid preparation tank including a tank main body for containing the chemical agent supplied from the chemical agent container and water for dissolving the chemical agent, and a mixture part for mixing the chemical agent with the water in the tank main body; a chemical liquid storage tank for storing the chemical liquid obtained by dissolving the chemical agent in the water in the chemical liquid preparation tank; and a chemical liquid supply part for supplying the chemical liquid stored in the chemical liquid storage tank into ballast water.

In this ballast water treatment system, the chemical liquid preparation tank and the chemical liquid storage tank are separately provided. Chemical liquid can be prepared by mixing the chemical agent and water in the chemical liquid preparation tank, and is supplied into ballast water after having been temporarily stored in the chemical liquid storage tank. Therefore, unlike a configuration of supplying a chemical liquid prepared in a chemical liquid preparation tank directly into ballast water, the ballast water treatment system according to the embodiments enables to prevent the insufficiently mixed chemical liquid from being supplied into the ballast water to thereby supply a chemical liquid having a stable chemical agent concentration into the ballast water.

The ballast water treatment system may further include: a detection part for detecting whether an amount of the chemical liquid in the chemical liquid storage tank is equal to or lower than a predetermined lower limit amount; and a control part allowing a chemical liquid replenishment operation of placing in an open state a valve for switchably permitting and suspending supply of the chemical liquid from the chemical liquid preparation tank into the chemical liquid storage tank when the amount of the chemical liquid in the chemical liquid storage tank is detected by the detection part to be equal to or lower than the lower limit amount.

According to this configuration, it is possible to replenish the chemical liquid from the chemical liquid preparation tank into the chemical liquid storage tank before the chemical liquid storage tank is emptied. This makes it possible to continuously supply the chemical liquid during ballasting of the ballast water.

The ballast water treatment system may further include a water storage part for storing the water. The control part may be configured to allow a chemical liquid preparation operation of: placing in an open state a valve for switchably permitting and suspending a supply of the water from the water storage part into the chemical liquid preparation tank; placing in an open state a valve for switchably permitting and suspending a supply of the chemical agent from the chemical agent container into the chemical liquid preparation tank; and causing the mixture part to operate.

According to this configuration, it is possible to newly prepare the chemical liquid according to a reduction amount of the chemical liquid in the chemical liquid preparation tank due to a chemical liquid replenishment operation, and prepare the chemical liquid in the chemical liquid preparation tank in preparation for a subsequent chemical liquid replenishment operation.

In the ballast water treatment system, the control part may be configured to start the chemical liquid preparation operation when a predetermined time elapses after a start of the chemical liquid replenishment operation, or when the amount of the chemical liquid in the chemical liquid preparation tank becomes equal to or lower than a predetermined lower limit amount after the chemical liquid replenishment operation is started.

According to this configuration, it is possible to easily control a timing for newly starting a chemical liquid preparation in the chemical liquid preparation tank.

In the ballast water treatment system, the control part may be configured to control the open time of the valve switchable over the supply and suspension of the water from the water storage part into the chemical liquid preparation tank to supply a predetermined amount of water from the water storage part into the chemical liquid preparation tank in the chemical liquid preparation operation.

According to this configuration, it is possible to easily prepare the chemical liquid having a fixed concentration in the chemical liquid preparation tank.

The ballast water treatment system may further comprise a heating part for heating the water stored in the water storage part.

According to this configuration, it is possible to increase the dissolution amount of the chemical agent by heating the water. It is thus possible to easily prepare a highly concentrated chemical liquid. This makes it possible to reduce the preparation amount and the storage amount of the chemical liquid. Therefore, the size of the chemical liquid preparation tank and the chemical liquid storage tank can be reduced to thereby achieve a cost reduction.

In the ballast water treatment system, the control part may be configured to allow a cleaning operation of placing in the open state the valve for switchably permitting and suspending the supply of the water from the water storage part into the chemical liquid preparation tank based on a drainage completion signal indicating a drainage completion of the chemical liquid from the chemical liquid preparation tank and the chemical liquid storage tank.

According to this configuration, it is possible to prevent the residual chemical liquid in the tank from giving negative effects to apparatus by cleaning (rinsing) the inside of the tank after the drainage of the chemical liquid.

In the ballast water treatment system, the tank main body may have a cylindrical shape. The mixture part may be arranged in the tank main body. The chemical liquid preparation tank may further include a baffle plate around the mixture part in the tank main body.

According to this configuration, it is possible to generate a turbulent flow in the tank main body by causing the water flow to collide against the baffle plate when mixing of the chemical agent with water. This makes it possible to further improve the mixing efficiency of the chemical agent in the water.

In the ballast water treatment system, at least two of the chemical agent container, the chemical liquid preparation tank, and the chemical liquid storage tank may overlap each other in a vertical direction.

According to this configuration, it is possible to further reduce the installation area of the ballast water treatment system. Therefore, the system can be easily applied to a limited installation space in a vessel. Further, it is possible to drop a chemical agent and chemical liquid by force of gravity, eliminating thus the need of a mechanism for conveying the chemical agent, a pump for supplying the chemical liquid, or the like.

It should be understood that the embodiments disclosed herein are merely examples in all respects and should not be considered restrictive. The present invention is expressed not by the description above but by the scope of the claims, and is intended to include all the changes applied within the meaning and the scope equivalent to the scope of the claims.

## Claims

1. A ballast water treatment system, comprising:
a chemical agent container for containing a chemical agent for a ballast water treatment;
a chemical liquid preparation tank including a tank main body for containing the chemical agent supplied from the chemical agent container and water for dissolving the chemical agent, and a mixture part for mixing the chemical agent with the water in the tank main body;
a chemical liquid storage tank for storing the chemical liquid obtained by dissolving the chemical agent in the water in the chemical liquid preparation tank; and
a chemical liquid supply part for supplying the chemical liquid stored in the chemical liquid storage tank into ballast water.

2. The ballast water treatment system according to claim 1, further comprising:
a detection part for detecting whether an amount of the chemical liquid in the chemical liquid storage tank is equal to or lower than a predetermined lower limit amount; and
a control part allowing a chemical liquid replenishment operation of placing in an open state a valve for switchably permitting and suspending supply of the chemical liquid from the chemical liquid preparation tank into the chemical liquid storage tank when the amount of the chemical liquid in the chemical liquid storage tank is detected by the detection part to be equal to or lower than the lower limit amount.

3. The ballast water treatment system according to claim 2, further comprising:
a water storage part for storing the water, wherein
the control part allows a chemical liquid preparation operation of: placing in an open state a valve for switchably permitting and suspending a supply of the water from the water storage part into the chemical liquid preparation tank; placing in an open state a valve for switchably permitting and suspending a supply of the chemical agent from the chemical agent container into the chemical liquid preparation tank; and causing the mixture part to operate.

4. The ballast water treatment system according to claim 3, wherein
the control part starts the chemical liquid preparation operation when a predetermined time elapses after a start of the chemical liquid replenishment operation, or when the amount of the chemical liquid in the chemical liquid preparation tank becomes equal to or lower than a predetermined lower limit amount after the chemical liquid replenishment operation is started.

5. The ballast water treatment system according to claim 3 or 4, wherein
the control part controls the open time of the valve switchable over the supply and suspension of the water from the water storage part into the chemical liquid preparation tank to supply a predetermined amount of water from the water storage part into the chemical liquid preparation tank in the chemical liquid preparation operation.

6. The ballast water treatment system according to any one of claims 3 to 5, further comprising:
a heating part for heating the water stored in the water storage part.

7. The ballast water treatment system according to any one of claims 3 to 6, wherein
the control part allows a cleaning operation of placing in the open state the valve for switchably permitting and suspending the supply of the water from the water storage part into the chemical liquid preparation tank based on a drainage completion signal indicating a drainage completion of the chemical liquid from the chemical liquid preparation tank and the chemical liquid storage tank.

8. The ballast water treatment system according to any one of claims 1 to 7, wherein
the tank main body has a cylindrical shape,
the mixture part is arranged in the tank main body, and
the chemical liquid preparation tank further includes a baffle plate around the mixture part in the tank main body.

9. The ballast water treatment system according to any one of claims 1 to 8, wherein
at least two of the chemical agent container, the chemical liquid preparation tank, and the chemical liquid storage tank overlap each other in a vertical direction.
